# EUROPÄISCHE PATENTSCHRIFT

(11) **EP 0 416 404 B1**
(45) Veröffentlichungstag und Bekanntmachung des Hinweises auf die Patenterteilung: **12.10.1994**
(21) Anmeldenummer: 90116306.3
(22) Anmeldetag: 25.08.1990
(51) Int. Cl.: C08L 69/00, C08K 5/3475

(54) **UV-Absorberhaltige Polycarbonate**
Polycarbonates containing UV-absorbents
Polycarbonates contenant des absorbeurs UV

(30) Priorität: 07.09.1989 DE 3929671
(43) Veröffentlichungstag der Anmeldung: 13.03.1991
(73) Patentinhaber: BAYER AG, 51368 Leverkusen (DE)
(72) Erfinder: Westeppe, Uwe, Dr., D-4020 Mettmann (DE); Freitag, Dieter, Dr., D-4150 Krefeld (DE); Novertné, Werner, Dr., D-4150 Krefeld (DE); Grigo, Ulrich, Dr., D-4152 Kempen 3 (DE)

(56) Entgegenhaltungen:
- EP-A- 0 247 480
- DE-A- 3 832 396
- US-A- 4 812 498
- US-A- 4 816 504

## Beschreibung

Gegenstand der Erfindung der Deutschen Patentanmeldung P 3 832 396.6 (Le A 26 344) sind Dihydroxydiphenylcycloalkane der Formel (I) 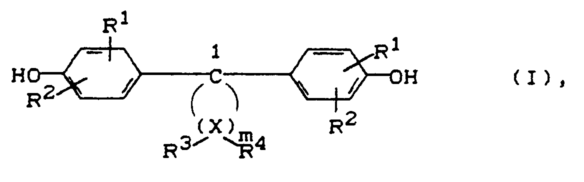
worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴,: für jedes X individuell wählbar, unabhängig voneinander Wasserstoff oder C₁-C₆-Alkyl
und
- X: Kohlenstoff bedeuten,
mit der Maßgabe, daß an mindestens einem Atom X R³ und R⁴ gleichzeitig Alkyl bedeuten.

Bevorzugt sind an 1 - 2 Atomen X, insbesondere nur an einem Atom X, R³ und R⁴ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyl-disubstitution in β-Stellung zu C-1 bevorzugt.

Insbesondere sind Gegenstand der deutschen Patentanmeldung P 3 832 396.6 Dihydroxydiphenylcycloalkane mit 5 und 6 Ring-C-Atomen im cycloaliphatischen Rest [m = 4 oder 5 in Formel (I)] wie beispielsweise die Diphenole der Formeln 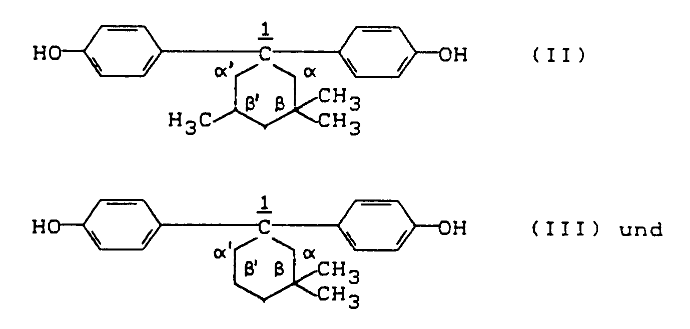 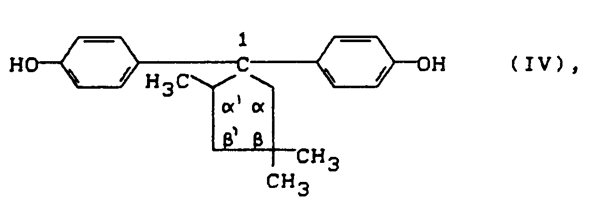
wobei das 1,1-Bis-(4-hydroxyphenyl)-3.3.5-trimethylcyclohexan (Formel II) besonders bevorzugt ist.

Die Dihydroxydiphenylcycloalkane der Formel (I) können in an sich bekannter Weise durch Kondensation von Phenolen der Formel (V) 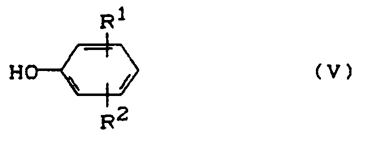
und Ketonen der Formel (VI) 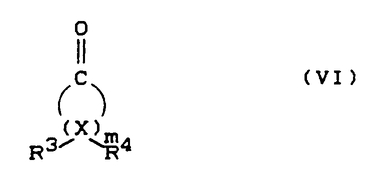
hergestellt werden, wobei in den Formeln (V) und (VI) X, R¹, R², R³, R⁴ und m die für Formel (I) angegebene Bedeutung haben.

Die Phenole der Formel (V) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenole, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, Diphenylphenol und o-Benzylphenol.

Die Ketone der Formel (VI) sind literaturbekannt (siehe beispielsweise) Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488-1492, US-PS 2 692 289, Allen et al., J. Chem. Soc., (1959), 2186-2192 und J. Org. Chem. Vol. 38, (1973), Seiten 4431-4435, J. Am. Chem. Soc. 87, (1965), Seite 1353-1364. Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VI) sind:
3,3-Dimethylcyclopentanon, 3,3-Dimethylcyclohexanon, 4,4-Dimethylcyclohexanon, 3-Ethyl-3-Methylcyclopentanon, 2,3,3-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 3,3,5-Trimethylcyclohexanon, 3,4,4-Trimethylcyclohexanon, 2,3,3,4-Tetramethylcyclopentanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 4-Isopropyl-3,5,5-trimethylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon und 3,3,8-Trimethylcyclooctanon.

Beispiele für bevorzugte Ketone sind 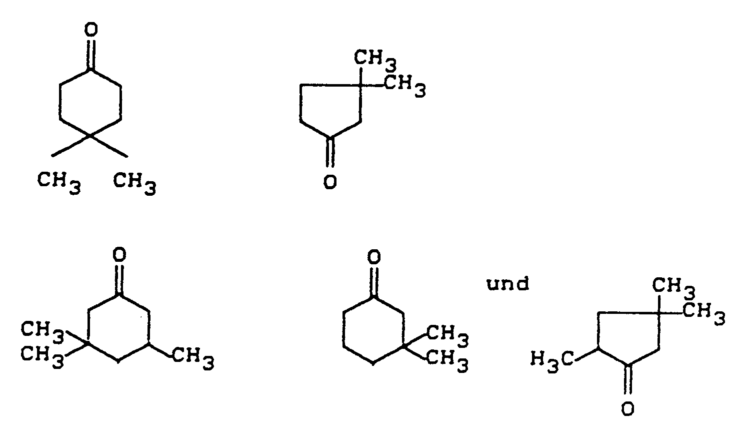
Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30°C bis 300°C, vorzugsweise von -15°C bis 150°C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie C₁-C₁₈-Alkyl-Mercaptanen, Schwefelwasserstoff, Thiophenolen, Thiosäuren und Dialkylsulfiden, bevorzugt in Mengen von 0,01 - 0,4 Mol/Mol Keton, insbesondere von 0,05 - 0,2 Mol/Mol Keton, beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Gegenstand der Erfindung der deutschen Patentanmeldung P 38 32 396.6 ist somit außerdem ein Verfahren zur Herstellung der Dihydroxydiphenylcycloalkane der Formel (I) 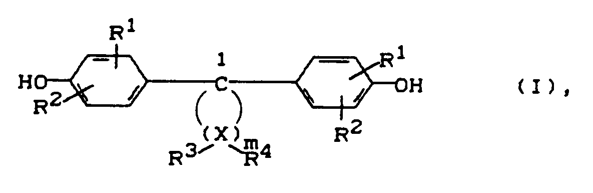
worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5, sind,
- R³ und R⁴,: für jedes X individuell wählbar, unabhängig voneinander Wasserstoff oder C₁-C₆-Alkyl
und
- X: Kohlenstoff ist
mit der Maßgabe, daß an mindestens einem Atom X R³ und R⁴ gleichzeitig Alkyl bedeuten,
das dadurch gekennzeichnet ist, daß man Phenole der Formel (V) 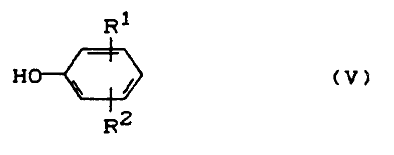
worin
- R¹ und R²: die für Formel (I) angegebene Bedeutung haben,
mit Ketonen der Formel (VI) 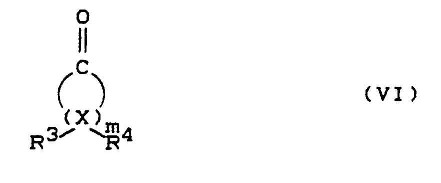
worin
- X, m, R³ und R⁴: die für Formel (I) angegebene Bedeutung haben,
im Molverhältnis (V) : (VI) zwischen 2:1 und 10:1, vorzugsweise zwischen 2,5:1 und 6:1 bei Temperaturen zwischen -30°C und 300°C, vorzugsweise zwischen -15°C und 150°C und bei Drücken von 1 bis 20 bar, vorzugsweise von 1 bis 10 bar in Anwesenheit saurer Katalysatoren und gegebenenfalls in Anwesenheit von Co-Katalysatoren und/oder Lösungsmitteln und/oder wasserentziehenden Mitteln umsetzt.

Bevorzugt sind in Formel (I) an 1 - 2 Atomen X, insbesondere nur an einem Atom X, R³ und R⁴ gleichzeitig Alkyl. Bevorzugter Alkylrest ist Methyl; ebenfalls verwendbar sind Ethyl oder C₃-C₆-Alkylreste, die geradkettig oder verzweigt sein können. Die X-Atome in α-Stellung zu dem di-phenylsubstituierten C-Atom (C-1) sind bevorzugt nicht dialkylsubstituiert, dagegen ist die Disubstitution mit Alkyl in β-Stellung in C-1 bevorzugt. Besonders bevorzugt ist, daß ein X-Atom in β-Stellung dialkylsubstituiert ist und ein X-Atom in β′-Stellung monoalkylsubstituiert ist.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Einzelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert.

### Beispiel A

### Herstellung des Diphenols (II)

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30°C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 h bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.
- Ausbeute:: 370 g
- Schmelzpunkt:: 205 bis 207° C
Die Diphenole der Formel (I) sind insbesondere geeignet zur Herstellung von hochmolekularen, thermoplastischen Polycarbonaten, die sich durch hohe Wärmeformbeständigkeit in Kombination mit einem guten sonstigen Eigenschaftsbild auszeichnen.

Gegenstand der Erfindung der deutschen Patentanmeldung P 38 32 396.6 ist somit auch die Verwendung der Diphenole der Formel (I) zur Herstellung von hochmolekularen thermoplastischen, aromatischen Polycarbonaten.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VII), zur Herstellung von hochmolekularen, thermoplastischen, aromatischen Polycarbonaten verwendet werden.

Geeignete andere Diphenole der Formel HO-Z-OH (VII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von zu verwendenden Diphenolen der Formel (I) zu den gegebenenfalls mitzuverwendenden anderen Diphenolen, beispielsweise denen der Formel (VII), soll zwischen 100 Mol-% (I) zu 0 Mol-% anderem Diphenol und 2 Mol-% (I) zu 98 Mol-% anderem Diphenol, vorzugsweise zwischen 100 Mol% (I) zu 0 Mol% anderem Diphenol und 5 Mol% (I) zu 95 Mol% anderem Diphenol und insbesondere zwischen 100 Mol%(I) zu 0 Mol% anderem Diphenol und 10 Mol% (I) zu 90 Mol% anderem Diphenol und 10 Mol% (I) zu 90 Mol% anderem Diphenol und ganz besonders zwischen 100 Mol% (I) zu 0 Mol% anderem Diphenol und 20 Mol% (I) zu 80 Mol% anderem Diphenol liegen.

Die hochmolekularen Polycarbonate aus den Diphenolen der Formel (I), gegebenenfalls in Kombination mit anderen Diphenolen können nach den bekannten Polycarbonatherstellungsverfahren hergestellt werden Dabei können die verschiedenen Diphenole sowohl statistisch als auch blockweise miteinander verknüpft sein.

Gegenstand der Erfindung der deutschen Patentanmeldung P 38 32 396.6 ist somit auch ein Verfahren zur Herstellung von hochmolekularen thermoplastischen, aromatischen Polycarbonaten aus Diphenolen, gegebenenfalls Kettenabbrechern und gegebenenfalls Verzweigern nach den bekannten Methoden der Polycarbonatherstellung, vorzugsweise nach dem Zweiphasengrenzflächenverfahren, das dadurch gekennzeichnet ist, daß man als Diphenole solche der Formel (I) in Mengen von 100 Mol-% bis 2 Mol-%, vorzugsweise in Mengen von 100 Mol-% bis 5 Mol-% und insbesondere in Mengen von 100 Mol-% bis 10 Mol-%, und ganz besonders 100 Mol-% bis 20 Mol-%, bezogen jeweils auf die Gesamtmolmenge an eingesetzten Diphenolen, verwendet.

Als Verzweiger dienen, falls benutzt, in bekannter Weise geringe Mengen, vorzugsweise Mengen zwischen 0,05 und 2,0 Mol% (bezogen auf eingesetzte Diphenole), an drei-oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4′-,4˝-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur Regelung des Molekulargewichts dienen in bekannter Weise monofunktionelle Verbindungen in üblichen Konzentrationen. Geeignete Verbindungen sind z.B. Phenol, tert.-Butylphenole oder andere Alkyl-C₁-C₇ substituierte Phenole. Zur Regelung des Molekulargewichts sind insbesondere kleine Mengen Phenole der Formel (VIII) geeignet 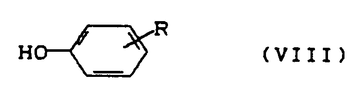
worin R einen verzweigten C₈- und/oder C₉-Alkylrest darstellt. Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

Die Polycarbonate können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VII), eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitzuverwendenden 0,05 bis 2 Mol-% an Verzweigern können entweder mit den Diphenolen in der wäßrig alkalischen Phase vorgelegt werden oder in dem organischen Lösungsmittel gelöst vor der Phosgenierung zugegeben werden.

Neben den einzusetzenden Diphenolen der Formel (I) sowie den anderen Diphenolen (VII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach Molen Diphenolat-Struktureinheiten von (I) und gegebenenfalls von den anderen Di-phenolen wie beispielsweise von (VII); ebenso kann bei Einsatz von Chlorkohlensäureestern die Phosgenmenge in bekannter Weise entsprechend reduziert werden.

Geeignete organische Lösungsmittel für die Lösung der Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Isolierung der Polycarbonate erfolgt in bekannter Weise.

Die hochmolekularen, thermoplastischen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden. Auch hier werden die Polycarbonate in bekannter Weise isoliert.

Die nach dem Verfahren der deutschen Patentanmeldung P 38 32 396.6 erhältlichen Polycarbonate haben bevorzugt Molekulargewichte M̅w (Gewichtsmittel, ermittelt durch Gelchromatographie nach vorheriger Eichung) von mindestens 10 000, besonders bevorzugt von 10 000 bis 300 000 und insbesondere von 20 000 bis 80 000. Sie können linear oder verzweigt sein, sie sind Homopolycarbonate oder Copolycarbonate auf Basis der Diphenole der Formel (I).

Gegenstand der Erfindung der deutschen Patentanmeldung P 38 32 396.6 sind somit auch hochmolekulare thermoplastische, aromatische Polycarbonate mit M̅w (Gewichtsmittelmolekulargewichten) von mindestens 10 000, vorzugsweise von 10 000 bis 300 000 und insbesondere von 20 000 bis 80 000, erhältlich nach dem erfindungsgemäßen Verfahren aus Diphenolen der Formel (I), die linear oder verzweigt sind.

Gegenstand der Erfindung der deutschen Patentanmeldung P 38 32 396.6 sind somit auch hochmolekulare, thermoplastische, aromatische Polycarbonate mit M̅w (Gewichtsmittelmolekulargewichten) von mindestens 10 000, vorzugsweise von 10 000 bis 300 000 und insbesondere von 20 000 bis 80 000, die bifunktionelle Carbonatstruktureinheiten der Formel (Ia) 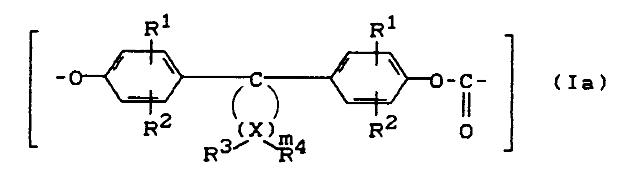
worin
- X, R¹, R², R³, R⁴ und m: die für die Formel (I) genannte Bedeutung haben,
in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten im Polycarbonat enthalten.

Die Polycarbonate der deutschen Patentanmeldung P 38 32 396.6 enthalten somit jeweils zu 100 Mol-% komplementäre Mengen an anderen difunktionellen Carbonatstuktureinheiten, beispielsweise solchen der Formel (VIIa) 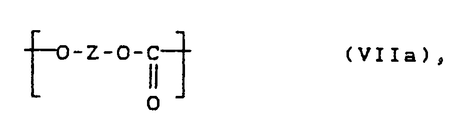
also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten im Polycarbonat.

Polycarbonate auf Basis von cycloaliphatischen Bisphenolen sind grundsätzlich bekannt und z.B. in EP-0 164 476, DE-OS 33 45 945, DE-OS 20 63 052, FR 14 27 998, WP 80 00 348, BE 785 189 beschrieben. Sie haben häufig relativ hohe Einfriertemperaturen, aber andere, wichtige physikalische Eigenschaften wie UV- und Wärmealterungsstabilität sind unzureichend.

Es hat sich gemäß deutscher Patentanmeldung P 38 32 396.6 nun gezeigt, daß durch den Einbau der Diphenole der Formel (I) Polycarbonate mit hoher Wärmeformbeständigkeit erhalten werden, die auch sonst ein gutes Eigenschaftsbild haben. Dies gilt insbesondere für die Polycarbonate auf Basis der Diphenole (I), in denen "m" 4 oder 5 ist, und ganz besonders für die Polycarbonate auf Basis der Diphenole (Ib) 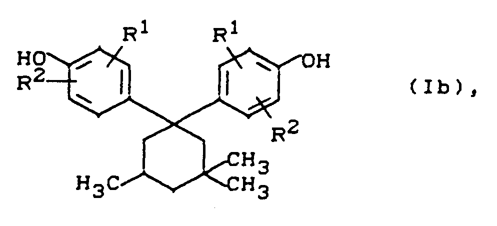
worin
- R¹ und R²: unabhängig voneinander die für Formel (I) genannte Bedeutung haben und besonders bevorzugt Wasserstoff sind.

Somit sind Gegenstand der Erfindung der deutschen Patentanmeldung P 38 32 396.6 vorzugsweise Polycarbonate, in denen die Struktureinheiten der Formel (Ia) eingeschränkt sind auf m = 4 oder 5 und ganz besonders solche der Formel (Ic) sind 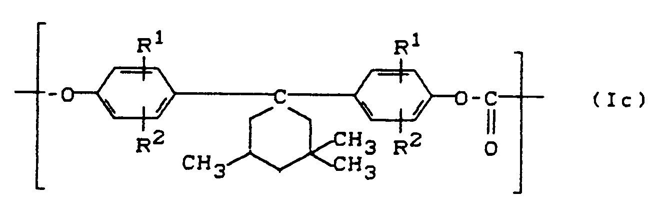
worin
- R¹ und R²: die für Formel (Ia) genannte Bedeutung haben, besonders bevorzugt aber Wasserstoff sind.

Diese Polycarbonate auf Basis der Diphenole der Formel (Ib), worin insbesondere R¹ und R² Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Kombination mit anderen Diphenolen, insbesondere mit denen der Formel (VII) lassen sich zudem die Polycarbonateigenschaften in günstiger Weise variieren.

Die Isolierung der nach dem Verfahren der deutschen Patentanmeldung P 38 32 396.6 erhältlichen Polycarbonate geschieht in bekannter Weise, indem man die bei Phasengrenzflächenverfahren erhaltene organische Phase abtrennt, neutral und elektrolytfrei wäscht und dann beispielsweise über einen Eindampfextruder als Granulat isoliert.

Den Polycarbonaten der deutschen Patentanmeldung P 38 32 396.6 können noch vor oder nach ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugesetzt werden.

Im einzelnen können beispielsweise Ruß, Kieselgur, Kaolin, Tone, CaF₂, CaCO₃, Aluminiumoxide, Glasfasern und anorganische Pigmente sowohl als Füllstoffe als auch als Nucleierungsmittel zugesetzt werden, sowie als Entformungsmittel beispielsweise Glycerinstearate, Pentaerythrittetrastearat und Trimethylolpropantristearat.

Die Polycarbonate der deutschen Patentanmeldung P 38 32 396.6 können zu Formkörpern verarbeitet werden, indem man beispielsweise die in bekannter Weise isolierten Polycarbonate zu Granulat extrudiert und dieses Granulat gegebenenfalls nach Zusatz der obengenannten Additive durch Spritzguß zu verschiedenen Artikeln in bekannter Weise verarbeitet.

Die Polycarbonate der deutschen Patentanmeldung P 38 32 396.6 sind als Formkörper überall dort einsetzbar, wo die bislang bekannten Polycarbonate eingesetzt wurden, also im Elektrosektor sowie im Bausektor für Abdeckungen und Verglasungen, und zwar dann, wenn erhöhte Wärmeformbeständigkeit bei gleichzeitig guter Verarbeitbarkeit, also wenn komplizierte Bauteile hoher Wärmeformbeständigkeit verlangt werden.

In den nachfolgenden Beispielen B.1 bis B.5 wird die relative Viskosität gemessen an 0,5 Gew.-%igen Lösung des Polycarbonats in CH₂Cl₂.

Die Einfriertemperatur oder Glastemperatur wird gemessen durch Differential Scanning Calorimetry (DSC).

### Beispiel B.1

31,0 g (0,1 Mol) des Diphenols (II), 33,6 g (0,6 Mol) KOH und 560 g Wasser werden in einer Inertgas-Atmosphäre unter Rühren gelöst. Dann fügt man eine Lösung von 0,188 g Phenol in 560 ml Methylenchlorid zu. In die gut gerührte Lösung wurden bei pH 13 bis 14 und 21 bis 25°C 19,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,259.

Die Glastemperatur des Polymers wurde zu 233°C bestimmt (DSC).

### Beispiel B.2

68,4 g (0,3 Mol) Bisphenol A (2,2-Bis-(4-hydroxyphenyl)-propan, 217,0 g (0,7 Mol) Diphenol (II), 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührte. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,336.

Die Glastemperatur des Polymers wurde zu 212°C bestimmt (DSC).

### Beispiel B.3

Wie in Beispiel B.2 wurde eine Mischung aus 114 g (0,5 Mol) Bisphenol A und 155 g (0,5 Mol) Diphenol (II) zum Polycarbonat umgesetzt.

Das Polycarbonat zeigte eine relative Lösungsviskosität von 1,386.

Die Glastemperatur des Polymer wurde zu 195°C bestimmt (DSC).

### Beispiel B.4

Wie in Beispiel B.2 wurde eine Mischung aus 159,6 g (0,7 Mol) Bisphenol A und 93 g (0,3 Mol) Diphenol (II) zum Polycarbonat umgesetzt.

Das Polycarbonat zeigte eine relative Lösungsviskosität von 1,437.

Die Glastemperatur des Polymers wurde zu 180°C bestimmt (DSC).

### Beispiel B.5

31,0 g (0,1 Mol) Diphenol (II), 24,0 g (0,6 Mol) NaOH und 270 g Wasser werden in einer Inertgas-Atmosphäre unter Rühren gelöst. Dann fügt man eine Lösung von 0,309 g 4-(1,1,3,3-Tetramethylbutyl)-phenol in 250 ml Methylenchlorid zu. In die gut gerührte Lösung wurden bei pH 13 bis 14 und 21 bis 25°C 19,8 g (0,2 Mol) Phosgen eingeleitet. Danach wird 0,1 ml Ethylpiperidin zugegeben und noch 45 Min. gerührt. Die bisphenolatfreie wäßrige Phase wird abgetrennt, die oganische Phase nach Ansäuern mit Phosphorsäure mit Wasser neutral gewaschen und vom Lösungsmittel befreit. Das Polycarbonat zeigte eine relative Lösungsviskosität von 1,314.

Die Glastemperatur des Polymers wurde zu 234°C bestimmt (DSC).

Zur Abschätzung des UV-Beständigkeit der neuen Polycarbonate wurde die Primärradikalbildung bei UV-Bestrahlung mit einer Quecksilberdampflampe (Kantenfilter 305 nm) im Vergleich zu einem Polycarbonat auf Basis des 2,2-Bis-(4-hydroxyphenyl)-propans bestimmt. Es zeigte sich, daß das Polycarbonat gemäß Beispiel B1 eine geringere Primärradikalbildungsrate und daher eine höhere UV-Beständigkeit aufweist.

Es hat sich nun gezeigt, daß die Polycarbonate auf Basis von Bisphenolen der Formel (I) unter extremen Bedingungen der Bewitterung, also unter dem Einfluß von Luft, Feuchtigkeit und UV-Licht abgebaut werden, was sich in einer Verschlechterung der mechanischen Kenndaten manifestiert. Außerdem werden die optischen Eigenschaften wie z.B. Transmission und Yellowness Index verschlechtert.

Überraschenderweise wurde nun gefunden, daß die Polycarbonate auf Basis von Bisphenolen der Formel (I) trotz ihrer hohen Verarbeitungstemperaturen bis zu 400°C mit Stabilisatoren auf Basis von Hydroxybenzotriazolen gegen UV-Licht zu stabilisieren sind. Ferner zeichnen sich die stabilisierten Einstellungen durch verbesserte Zähigkeit aus.

Gegenstand der vorliegenden Erfindung sind somit UV-Absorberhaltige Polycarbonate der deutschen Patentanmeldung P 3 832 396.6 (Le A 26 344), die dadurch gekennzeichnet sind, daß sie einen Gehalt von 0,05 Gew.-% bis 15 Gew.-%, vorzugsweise von 0,1 Gew.-% bis 12 Gew.-% und insbesondere von 0,2 Gew.-% bis 10 Gew.-%, bezogen auf Gewicht Polycarbonat, an UV-Absorbern der Formeln (A) und/oder (B) enthalten, 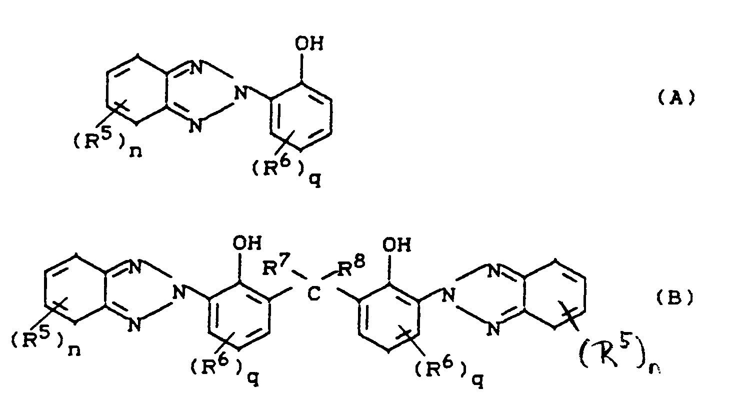
worin
- R⁵ und R⁶: unabhängig voneinander Wasserstoff, Halogen, C₁-C₁₀-Alkyl, C₅-C₁₀-Cycloalkyl, C₆-C₁₄-Aryl, C₇-C₁₃-Aralkyl, O-R⁹ oder -COOR⁹,
- R⁹: H oder C₁-C₄-Alkyl,
- R⁷ und R⁸: unabhängig voneinander Wasserstoff, C₁-C₄-Alkyl, C₅-C₆-Cycloalkyl, C₆-C₁₄-Aryl, C₇-C₉-Aralkyl bedeuten,
- q: 1, 2, 3 ist und
- n: 1, 2, 3 oder 4 ist.

Bevorzugte Polycarbonate gemäß vorliegender Erfindung sind auch die bevorzugten gemäß deutscher Patentanmeldung P 3 832 396.6 (Le A 26 344), dies gilt auch für die besonders bevorzugten Polycarbonate der Formel (Ic).

Bevorzugte UV-Absorber der Formel (A) beziehungsweise (B) sind solche, worin R₅ und R₆ H, Chlor oder Methyl, R₇ und R₈ H, C₁-C₄-Alkyl, Cyclohexyl, Phenyl, Naphthyl oder Benzyl und R₉ H oder CH₃ sind.

Hydroxybenzotriazole der Struktur (A), (B), sind bekannt, ihre Herstellung ist in der DOS 1 670 951 und der tschechischen Patentschrift 146 360 beschrieben. Insbesondere sind Hydroxybenzotriazole der Formel (A) und (B) geeignet, die eine Molmasse > 400 g/mol aufweisen und deren Schmelzpunkt oberhalb 120°C liegt.

Beispiele bevorzugter Hydroxybenzotriazole sind: 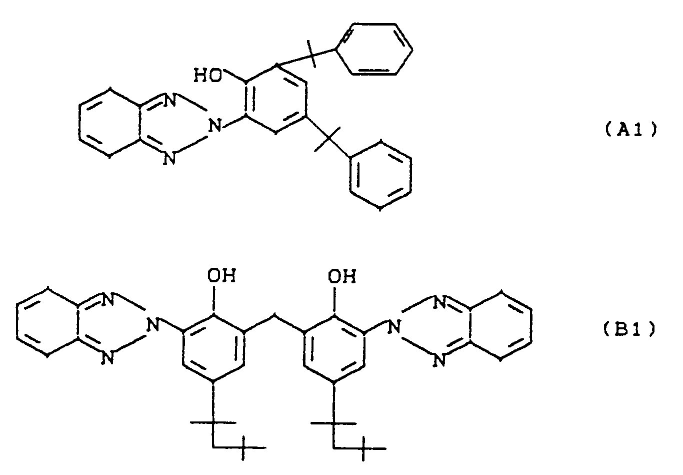
Es ist auch bekannt, aromatische Polycarbonate mit UV-Absorbern vom Typ der Hydroxybenzotriazole, z.B. Verbindungen mit der Formel (A), (B) zu schützen (Taschenbuch der Kunststoffadditive, Hrsg. V.R. Gächter, H. Müller, C. Hauser Verlag München, Wien 1983, S. 183 ff).

Bekannt war auch Polycarbonate auf Basis von Bishydroxyphenylcycloalkanen für elektrophotographische Photorezeptoren einzusetzen (siehe JA-OS 62039/1986, JA-OS 62040/1986 und JA-OS 105530/1986).

Der Gegenstand der vorliegenden Erfindung, nämlich hochwärmeformbeständige, zähe und in hohem Maße gegen Bewitterung stabilisierte Polycarbonate, war jedoch im Stand der Technik weder vorweggenommen noch nahegelegt.

Die Einarbeitung der UV-Absorber der Formeln (A) oder (B) in die Polycarbonate kann beispielsweise erfolgen über die Schmelze der Polycarbonate oder über Lösungen der Polycarbonate, beispielsweise in CH₂Cl₂, in an sich bekannter Weise.

Die erfindungsgemäßen UV-Absorberhaltigen Polycarbonate können in Fasern, Folien, Platten, Spritz und Extrusionsartikeln verarbeitet werden sie dies in der deutschen Patentanmeldung P 3 832 396.6 (Le A 26 344) beziehungsweise in der deutschen Patentanmeldung P 3 837 090.5 (Le A 26 402) und in der deutschen Patentanmeldung P 3 909 601.7 (Le A 26 699) beschrieben ist. Es sind dies im allgemeinen bekannte Verarbeitungsverfahren.

Beispiele für Gegenstände sind Platten Stegmehrfachplatten, Scheinwerferlampen und -reflektoren.

### Beispiele

Die Herstellung des Bisphenols der Formel (II) erfolgte gemäß den Angaben der deutschen Patentanmeldung P 3 833 953.6.

Nach den Angaben der deutschen Patentanmeldung P 3 833 953.6 wurde ein Copolycarbonat auf Basis von 35 Mol-% des Bisphenols der Formel (II) und 65 Mol-% 2,2-Bis-(4-hydroxyphenyl)-propan mit 4-(1,1,3,3-Tetramethylbutyl)-phenol als Kettenabbrecher nach dem Verfahren der Phasengrenzflächenpolykondensation hergestellt. Die rel. Lösungsviskosität betrug 1,30, gemessen in CH₂Cl₂ bei 25°C (0,5 g pro 100 ml CH₂Cl₂).

Als UV-Absorber wurden folgende Verbindungen eingesetzt:

### UV-Absorber A1:

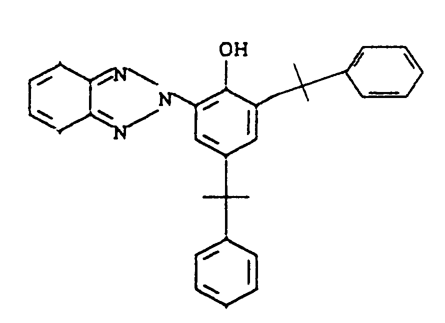

### UV-Absorber B1:

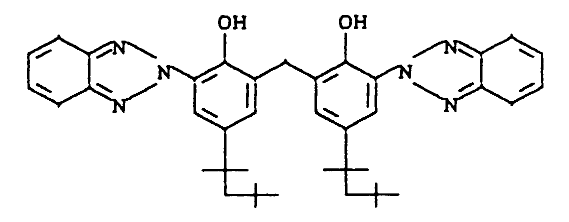

0,3 Gew.-% des UV-Absorbers wurden bei Temperaturen von 340°C auf einem Doppelwellenextruder in die Polycarbonate eingearbeitet und das Extrudat granuliert. Auf einer üblichen Spritzgußmaschine wurden Platten der Größe 60 x 40 x 4 mm und Prüfkörper der Maße 80 x 10 x 4 mm hergestellt. Die Bewitterung erfolgte im Weather-o-meter der Fa. Atlas, USA, mit einer 6,5 W-Xenon-Brenner bei einem Zyklus von 102 Minuten Belichtung und 18 Minuten Besprühung mit entmineralisiertem Wasser unter Belichtung. Die maximale Schwarztafeltemperaturen betrug 60 +/- 5°C. Nach den angegebenen Zeiten wurden die Platten abgemustert. Es wurde der Yellownessindex (nach DIN 6167), die rel. Lösungsviskosität, gemessen in CH₂Cl₂ bei 25°C (0,5 g pro 100 ml CH₂Cl₂) sowie die Schlagzähigkeit (nach ISO 1-C) ermittelt.

**Tabelle**

| Prüfkriterium | eingesetztes Polycarbonat | | |
|---|---|---|---|
| | unstabilisiert | mit UV-Stab. (A1) | mit UV-Stab. (B1) |
| rel. Lösungsviskosität | | | |
| 0 h | 1,292 | 1,290 | 1,293 |
| 500 h | 1,284 | 1,290 | 1,287 |
| 750 h | 1,284 | 1,289 | 1,288 |
| 1000 h | 1,279 | 1,289 | 1,288 |

| Yellowness-index | | | |
|---|---|---|---|
| 0 h | 8,4 | 8,6 | -- |
| 500 h | 11,44 | 6,2 | -- |
| 1000 h | 15,70 | 8,1 | -- |

| Schlagzähigkeit [kJ/m²] | | | |
|---|---|---|---|
| 0 h | n.g. | n.g. | n.g. |
| 750 h | 18 | 140 | 150 |
| 1000 h | 12 | 92 | 135 |

Die Beispiele belegen, daß die stabilisierten Einstellungen deutlich weniger vergilben und verbesserte Zähigkeitswerte nach Bewitterung aufweisen.

## Patentansprüche

1. UV-Absorberhaltige Polycarbonate mit M̅_{w} (Gewichtsmittelmolekulargewichten) von mindestens 10.000, die bifunktionelle Carbonatstruktureinheiten der Formel (Ia) 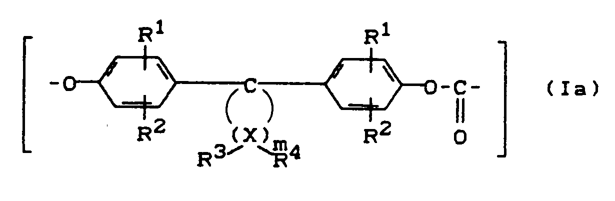 worin
R¹ und R² unabhängig voneinander Wasserstoff, Halogen, C₁-C₈-Alkyl, C₅-C₆-Cycloalkyl, C₆-C₁₀-Aryl und C₇-C₁₂-Aralkyl,
m eine ganze Zahl von 4 bis 7,
R³ und R⁴, für jedes X individuell wählbar, unabhängig voneinander Wasserstoff oder C₁-C₆-Alkyl
und
X Kohlenstoff bedeuten,
mit der Maßgabe, daß an mindestens einem Atom X R³ und R⁴ gleichzeitig Alkyl bedeuten,
in Mengen von 100 Mol-% bis 2 Mol-%, bezogen jeweils auf die Gesamtmenge von 100 Mol-% an difunktionellen Carbonatstruktureinheiten im Polycarbonat, enthalten, dadurch gekennzeichnet, daß sie einen Gehalt von 0,05 Gew.-% bis 15 Gew.-%, bezogen auf Polycarbonatgewicht, an UV-Absorbern der Formeln (A) und/oder (B) enthalten, 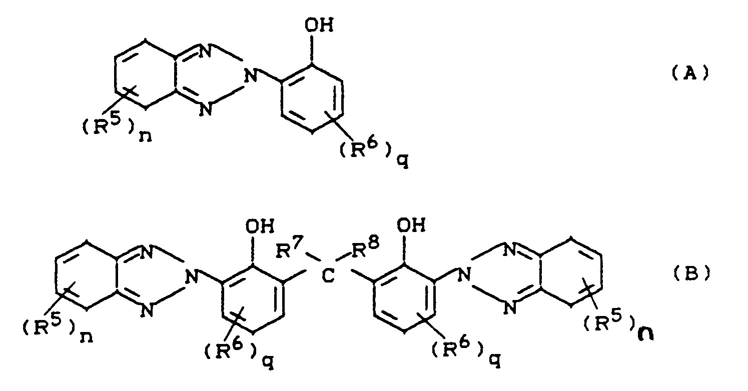 worin
R⁵ und R⁶ unabhängig voneinander Wasserstoff, Halogen, C₁-C₁₀-Alkyl, C₅-C₁₀-Cycloalkyl, C₆-C₁₄-Aryl, C₇-C₁₃-Aralkyl, 0-R⁹ oder -COOR⁹,
R⁹ H oder C₁-C₄-Alkyl,
R⁷ und R⁸ unabhängig voneinander Wasserstoff, C₁-C₄-Alkyl, C₅-C₆-Cycloalkyl, C₆-C₁₄-Aryl, C₇-C₉-Aralkyl bedeuten,
q 1, 2, 3 ist und
n 1, 2, 3 oder 4 ist.

## Claims

1. UV-stabilized polycarbonates with Mw values (weight average molecular weight) of at least 10,000 which contain bifunctional carbonate structural units corresponding to the formula (Ia): 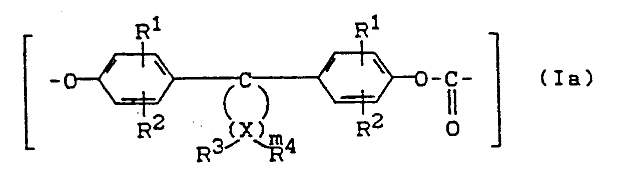 in which
R¹ and R² independently of one another represent hydrogen, halogen, C₁₋₈ alkyl, C₅₋₆ cycloalkyl, C₆₋₁₀ aryl and C₇₋₁₂ aralkyl,
m is an integer of 4 to 7,
R³ and R⁴ may be individually selected for each X and independently of one another represent hydrogen or C₁₋₆ alkyl
and
X represents carbon,
with the proviso that, at at least one atom X, both R³ and R⁴ are alkyl,
in quantities of 100 mol-% to 2 mol-%, based on the total quantity of 100 mol-% of difunctional carbonate structural units in the polycarbonate, characterized in that they contain 0.05% by weight to 15% by weight, based on the weight of polycarbonate, of UV absorbers corresponding to formulae (A) and/or (B): 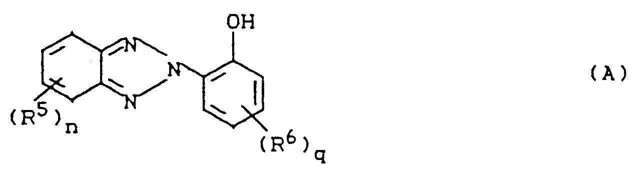 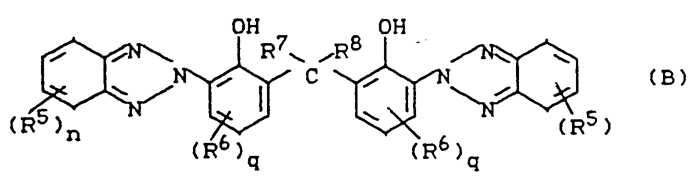 in which
R⁵ and R⁶ independently of one another represent hydrogen, halogen, C₁₋₁₀ alkyl, C₅₋₁₀ cycloalkyl, C₆₋₁₄ aryl, C₇₋₁₃ aralkyl, O-R⁹ or -COOR⁹,
R⁹ represents H or C₁₋₄ alkyl,
R⁷ and R⁸ independently of one another represent hydrogen, C₁₋₄ alkyl, C₅₋₆ cycloalkyl, C₆₋₁₄ aryl, C₇₋₉ aralkyl,
q is 1, 2, 3 and
n is 1, 2, 3 or 4.

## Revendications

1. Polycarbonates contenant des absorbeurs d'UV avec des valeurs Mw (poids moléculaires moyens en poids) d'au moins 10.000, contenant des unités structurelles carbonate bifonctionnelles de formule (Ia) 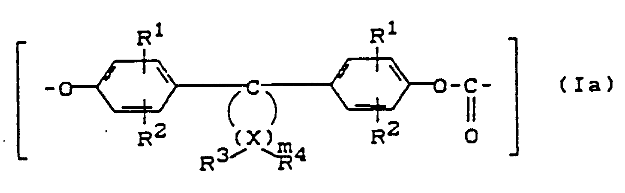 dans laquelle
R¹ et R² signifient indépendamment l'un de l'autre l'hydrogène, un halogène, un groupe alkyle en C₁-C₈, cycloalkyle en C₅-C₆, aryle en C₆-C₁₀, et aralkyle en C₇-C₁₂,
m signifie un nombre entier de 4 à 7,
R³ et R⁴ peuvent être choisis individuellement pour chaque X et signifient indépendamment l'un de l'autre l'hydrogène ou un groupe Alkyle en C₁-C₆,
et
X signifie le carbone,
avec la condition que sur au moins un atome X, R³ et R⁴ signifient en même temps un groupe alkyle, en quantités de 100 moles-% à 2 moles-%, chaque fois par rapport à la quantité totale de 100 moles-% d'unités structurelles carbonate difonctionnelles présentes dans le polycarbonate, caractérisés en ce qu'ils contiennent une teneur de 0,05% en poids à 15% en poids par rapport au poids de polycarbonate d'absorbeurs d'UV de formule (A) et/ou (B) 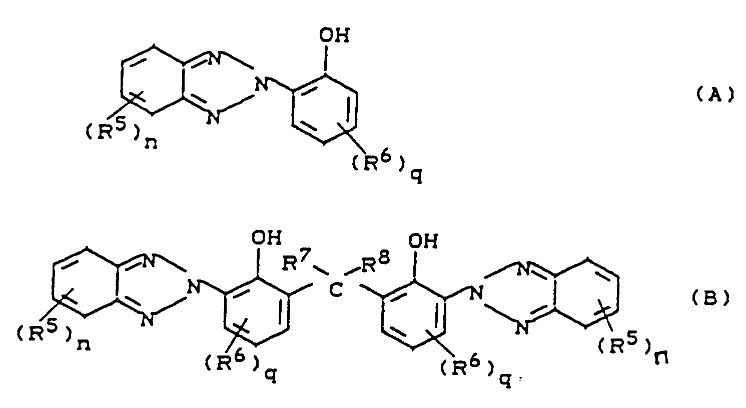 dans lesquelles
R⁵ et R⁶ signifient indépendamment l'un de l'autre l'hydrogène, un halogène, un groupe alkyle en C₁-C₁₀, cycloalkyle en C₅-C₁₀, aryle en C₆-C₁₄, aralkyle en C₇-C₁₃, O-R⁹ ou -COOR⁹,
R⁹ signifie H ou un groupe alkyle en C₁-C₄,
R⁷ et R⁸ signifient indépendamment l'un de l'autre l'hydrogène, un groupe alkyle en C₁-C₄, cycloalkyle en C₅-C₆, aryle en C₆-C₁₄, aralkyle en C₇-C₉,
q signifie 1, 2, 3 et
n signifie 1, 2, 3 ou 4.
